# EUROPEAN PATENT APPLICATION

(11) **EP 4 231 756 A1**
(43) Date of publication of application: **23.08.2023**
(21) Application number: 21881973.8
(22) Date of filing: 18.10.2021
(51) Int. Cl.: H04W 72/12, H04L 1/18

(54) **INFORMATION TRANSMISSION METHOD AND APPARATUS, AND RELATED DEVICES AND STORAGE MEDIUM**

(30) Priority: 19.10.2020 CN 202011120229
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: YANG, Tuo, Beijing 100053 (CN); WANG, Fei, Beijing 100053 (CN); LI, Yan, Beijing 100053 (CN)
(74) Representative: GPI Brevets
(86) International application number: PCT/CN2021/124498
(87) International publication number: WO 2022/083557

(57) **Abstract**

An information transmission method, an information transmission apparatus, a network device, a terminal and a storage medium are provided. The method includes: sending first DCI to a terminal, where the first DCI carries first information; the first information is configured to indicate information related to an HARQ process of a downlink channel scheduled by the first DCI to carry a multicast and/or broadcast service, where a CRC of the first DCI is scrambled by a RNTI dedicated to the terminal.

## Description

### CROSS REFERENCE OF RELATED APPLICATION

The present disclosure claims a priority of Chinese patent disclosure No. 202011120229.0 filed on October 19, 2020, which is incorporated herein by reference in its entirety.

### TECHNICAL FIELD

The present disclosure relates to the field of wireless communications, and in particular, to an information transmission method, an information transmission apparatus, a related device and a storage medium.

### BACKGROUND

In the fourth generation mobile communication technology (4G) Long Term Evolution (LTE) system, multicast and broadcast transmissions are achieved by introducing Multimedia Broadcast Multicast Service (MBMS) and single cell point-to-multipoint (SC-PTM) technologies.

However, in the related art, the scheduling mechanism of the multicast or broadcast service needs to be optimized.

### SUMMARY

In order to solve related technical problems, embodiments of the present disclosure provide an information transmission method, an information transmission apparatus, related devices, and a storage medium.

The technical scheme of the embodiment of the disclosure is realized as follows.

An information transmission method is provided in the present disclosure, applied to network device and including:
sending first downlink control information (DCI) to a terminal, where the first DCI carries first information; the first information is configured to indicate information related to a hybrid automatic repeat request (HARQ) process of a downlink channel scheduled by the first DCI to carry a multicast and/or broadcast service;
where a cyclic redundancy check (CRC) of the first DCI is scrambled by a radio network temporary identifier (RNTI) dedicated to the terminal.

Optionally, the first information includes second information and/or third information; the second information is configured to indicate a first HARQ process number of the downlink channel scheduled by the first DCI; the third information is at least configured to determine whether the service transported by the downlink channel scheduled by the first DCI is the multicast and/or broadcast service.

Optionally, the third information is configured to indicate whether the downlink channel scheduled by the first DCI transports the multicast and/or broadcast service.

Optionally, the third information is configured to indicate whether the HARQ process of the downlink channel scheduled by the first DCI belongs to a downlink HARQ process transporting a multicast and/or broadcast service.

Optionally, the third information is configured to indicate the RNTI used by an initialization value of a scrambling sequence generator of the downlink channel scheduled by the first DCI.

Optionally, the method further includes:
sending fifth information to the terminal, where the fifth information is configured to indicate a first parameter and/or a second parameter; the first parameter represents a number of parallel downlink HARQ processes for transporting unicast service; the second parameter represents a number of parallel downlink HARQ processes for transporting multicast and/or broadcast service.

Optionally, when a number of parallel downlink HARQ processes of the multicast and/or broadcast service is larger than 1, the method further includes:
sending second DCI to the terminal, where the second DCI carries sixth information; the sixth information is configured to indicate a HARQ process number of a downlink channel scheduled by the second DCI to carry the multicast and/or broadcast service;
where a CRC of the second DCI is scrambled by an RNTI shared by at least two terminals.

An information transmission method is provided in the present disclosure, applied to a terminal and including:
receiving first downlink control information (DCI) sent by a network side, where the first DCI carries first information; the first information is configured to indicate information related to a hybrid automatic repeat request (HARQ) process of a downlink channel scheduled by the first DCI to carry a multicast and/or broadcast service;
where a cyclic redundancy check (CRC) of the first DCI is scrambled by a radio network temporary identifier (RNTI) dedicated to the terminal.

Optionally, the method further includes:
combining data of a transport block (TB) scheduled by the first DCI with the data belonging to the TB in a current soft buffer, when the transmission scheduled by the first DCI is retransmission.

Optionally, the first information includes second information and/or third information; the second information is configured to indicate a first HARQ process number of the downlink channel scheduled by the first DCI; the third information is at least configured to determine whether the service transported by the downlink channel scheduled by the first DCI is the multicast and/or broadcast service.

Optionally, the third information is configured to indicate whether the downlink channel scheduled by the first DCI transports the multicast and/or broadcast service.

Optionally, the third information is configured to indicate whether the HARQ process of the downlink channel scheduled by the first DCI belongs to a downlink HARQ process transporting a multicast and/or broadcast service.

Optionally, the third information is configured to indicate the RNTI used by an initialization value of a scrambling sequence generator of the downlink channel scheduled by the first DCI.

Optionally, the method further includes:
determining the RNTI used by the initialization value of the scrambling sequence generator of the downlink channel scheduled by the first DCI, according to the third information.

Optionally, the method further includes:
obtaining a first parameter and/or a second parameter from the network side or in a predefined manner, where the first parameter represents a number of parallel downlink HARQ processes for transporting unicast service; the second parameter represents a number of parallel downlink HARQ processes for transporting multicast and/or broadcast service.

Optionally, the method further includes:
receiving fifth information sent by the network side, where the fifth information is configured to indicate the first parameter and/or the second parameter.

Optionally, when a number of parallel downlink HARQ processes of the multicast and/or broadcast service is larger than 1, the method further includes:
receiving second DCI sent by the network side, where the second DCI carries sixth information; the sixth information is configured to indicate a HARQ process number of a downlink channel scheduled by the second DCI to carry the multicast and/or broadcast service;
where a CRC of the second DCI is scrambled by an RNTI shared by at least two terminals.

An information transmission apparatus is provided in the present disclosure, including:
a first transmission unit, configured to send first downlink control information (DCI) to a terminal, where the first DCI carries first information; the first information is configured to indicate information related to a hybrid automatic repeat request (HARQ) process of a downlink channel scheduled by the first DCI to carry a multicast and/or broadcast service;
where a cyclic redundancy check (CRC) of the first DCI is scrambled by a radio network temporary identifier (RNTI) dedicated to the terminal.

An information transmission apparatus is provided in the present disclosure, including:
a first receiving unit, configured to receive first downlink control information (DCI) sent by a network side, where the first DCI carries first information; the first information is configured to indicate information related to a hybrid automatic repeat request (HARQ) process of a downlink channel scheduled by the first DCI to carry a multicast and/or broadcast service;
where a cyclic redundancy check (CRC) of the first DCI is scrambled by a radio network temporary identifier (RNTI) dedicated to the terminal.

A network device is provided in the present disclosure, including: a first communication interface and a first processor; where
the first communication interface is configured to send first downlink control information (DCI) to a terminal, where the first DCI carries first information; the first information is configured to indicate information related to a hybrid automatic repeat request (HARQ) process of a downlink channel scheduled by the first DCI to carry a multicast and/or broadcast service;
where a cyclic redundancy check (CRC) of the first DCI is scrambled by a radio network temporary identifier (RNTI) dedicated to the terminal.

A terminal is provided in the present disclosure, including: a second communication interface and a second processor; where
the second communication interface is configured to receive first downlink control information (DCI) sent by a network side, where the first DCI carries first information; the first information is configured to indicate information related to a hybrid automatic repeat request (HARQ) process of a downlink channel scheduled by the first DCI to carry a multicast and/or broadcast service;
where a cyclic redundancy check (CRC) of the first DCI is scrambled by a radio network temporary identifier (RNTI) dedicated to the terminal.

A network device is provided in the present disclosure, including: a first processor, and a first memory configured to store a computer program executable on the processor,
where the first processor is configured to execute the computer program to perform the above method of the network device side.

A network device is provided in the present disclosure, including: a second processor, and a second memory configured to store a computer program executable on the processor,
where the second processor is configured to execute the computer program to perform the above method of the terminal side.

A storage medium is provided in the present disclosure, storing a computer program, where the computer program is executed by a processor to perform the above method of the network device side or the method of the terminal side.

According to the information transmission method, the information transmission apparatus, the related device and the storage medium, the network device sends first downlink control information (DCI) to a terminal, where the first DCI carries first information; the first information is configured to indicate information related to a hybrid automatic repeat request (HARQ) process of a downlink channel scheduled by the first DCI to carry a multicast and/or broadcast service, where a cyclic redundancy check (CRC) of the first DCI is scrambled by a radio network temporary identifier (RNTI) dedicated to the terminal. The network side indicates to the terminal the information related to the HARQ process of a downlink channel scheduled by the DCI to carry a multicast and/or broadcast service, and the CRC of the DCI is scrambled by the RNTI dedicated to the terminal, so that the retransmission of the multicast and/or broadcast services is realized by using the unicast DCI, thereby avoiding the occupying of signaling overhead of other terminals, and avoiding the unnecessary data reception by other terminal.

### BRIEF DESCRIPTION OF THE DRAWINGS

Fig. 1 is a schematic flowchart of an information transmission method according to an embodiment of the present disclosure;
Fig. 2 is a schematic view of an information transmission apparatus according to an embodiment of the present disclosure;
FIG. 3 is a schematic flowchart of another information transmission apparatus according to an embodiment of the present disclosure;
Fig. 4 is a schematic view of a network device according to an embodiment of the present disclosure;
Fig. 5 is a schematic view of a terminal according to an embodiment of the present disclosure; and
Fig. 6 is a schematic view of an information transmission system according to an embodiment of the present disclosure.

### DETAILED DESCRIPTION

The present disclosure will be described in further detail with reference to the drawings and examples.

The current MBMS and SC-PTM technologies are rarely introduced in true commercial networks, mainly due to: the complexity and mode of the network structure, or the mode based on the conventional preset service, provide services. For example, for MBMS, the logical channels transmitted over the air interface mainly include a Multicast Control CHannel (MCCH) and a Multicast Traffic CHannel (MTCH), where the MCCH is used for transmitting Control information of MBMS and the MTCH is used for transmitting downlink data. Both logical channels MCCH and MTCH can be mapped to transport channel Multicast Channel (MCH), and finally MCH is transmitted by Physical Multicast Channel (PMCH). For SC-PTM service, the logical channels transmitted over the air interface mainly include Single-Cell MCCH (SC-MCCH) and Single-Cell Multicast Traffic CHannel (SC-MTCH). The SC-MCCH is used for transmitting control information of SC-MTCH, and the SC-MTCH is used for transmitting service data of SC-PTM. The SC-MCCH and SC-MTCH can be mapped to a downlink shared channel (DL-SCH), and finally the DL-SCH realizes transmission by a Physical Downlink Shared Channel (PDSCH).

The MCCH is transmitted periodically, indicated by system messages, and is semi-statically configured rather than being based on dynamic scheduling; and for MTCH transmission, the time domain scheduling information (including frequency domain scheduling information and other underlying configuration information based on semi-static configuration indication) for MTCH is indicated to User Equipments (UEs) by the MCCH based on Medium Access Control (MAC) indication information. Therefore, the basic flow of the MBMS service includes: the configuration information of the MCCH is indicated through the system message (semi-statically configured), and further, the MCCH indicates the time domain scheduling information of the MCH that can carry the MTCH, so the UE can obtain the MTCH information transported through the PMCH by detecting the system information and the PMCH transporting the MCCH. And SC-MCCH and SC-MTCH can be mapped to DL-SCH, and air interface transmission is realized by PDSCH instead of PMCH. Similar to the MCCH, the SC-MCCH is transmitted periodically (the period is configured by the system semi-persistent type20, and the system message indicates only the time domain location information of the SC-MCCH, and the specific resource used by the SC-MCCH is indicated by Physical Downlink Control Channel (PDCCH) scheduling (CRC of PDCCH is scrambled by SC-RNTI), which is different from the transmission method in MBMS in which PMCH is based on semi-persistent configuration completely. The SC-MCCH shall provide configuration information for all MBMS services currently transported by the SC-MTCH, including a Temporary Mobile Group Identity (TMGI) (which may also include a session ID) for each MBMS service, and its associated group radio network temporary identity (G-RNTI) and scheduling information (such as scheduling period, duration timer (on duration timer), Discontinuous Reception (DRX), etc.) but the resources used in the corresponding time domain location are indicated by PDCCH scheduling (CRC of PDCCH is scrambled by G-RNTI). Therefore, the basic flow of the SC-PTM service includes: the system message (semi-statically configured) indicates configuration information of the SC-MCCH, the terminal monitors a PDCCH scrambled by a single-cell radio network temporary identifier (SC-RNTI) on a corresponding time domain transmission opportunity to obtain SC-MCCH information transported by the PDSCH in combination with the information, and further detects the PDCCH scrambled by the G-RNTI on the corresponding time domain transmission opportunity to obtain SC-MTCH information transported by the PDSCH in combination with the SC-MCCH information.

In the traditional broadcast or multicast technology of LTE, an HARQ mechanism is not supported, and a terminal does not need to feed back channel state information or HARQ-ACK/NACK information, so that a network side cannot confirm that each interested user accurately receives services, and only can adopt a conservative Modulation and Coding Strategy (MCS), thereby causing lower spectrum efficiency of SC-PTM and poorer utilization rate of network resources; on the other hand, in the conventional LTE broadcast or multicast technology, regardless of the initial multi-cell Single Frequency Network (SFN) -based MBMS technology or the later single cell MBMS-based SC-PTM technology, it is required to pre-configure information, such as at least the MCCH or the period of the SC-MCCH, in the broadcast information, and the information is available to all UEs in a cell. That is, in this mode, the network is required to pre-configure specific system information, thus limiting the freedom of terminal selection. In the unicast mode, the network side needs to know whether each user air interface data is accurately received by the user or how to transmit each user air interface data is efficient, which needs to be assisted by an HARQ mechanism, i.e., a channel state information feedback mechanism. Specifically, in the related art, one terminal may support 16 parallel HARQ processes at most, and may indicate which HARQ process a currently scheduled TB belongs to in the scheduling DCI, and the terminal determines, according to an HARQ process number and an indication of a New Data Indication (NDI), whether the TB is initially transmitted or retransmitted data, and if the TB is retransmitted data, the terminal combines and demodulates the data of the TB and previously received data of the same HARQ process. Therefore, in 4G evolution and fifth generation mobile communication technology (5G) systems, a new scheme needs to be introduced, so that a network side can use air interface resources concisely and efficiently (by using feedback information of multiple terminals to determine retransmission and MCS levels) in a multicast mode, and meanwhile, a user can be guaranteed to obtain service guarantee in a unicast mode.

Therefore, in the multicast or broadcast service of the 4G evolution or new air interface (NR) system, an HARQ mechanism may be introduced, and the network side implements retransmission based on the received NACK information.

However, in the related art, DCI may only be used to indicate the HARQ process number of unicast service, and may not support indication of the HARQ process number of multicast and/or broadcast service; in addition, in the related art, there is no unicast HARQ and multicast and/or broadcast HARQ processing mechanism. For example, following the LTE SC-PTM-like scheme in the NR system, the network side uses the common RNTI (e.g. G-RNTI) for CRC scrambling PDCCH to schedule the PDSCH transporting the corresponding multicast and/or broadcast service, at this time, since the PDCCH is for a group of users, the transported DCI indicates the HARQ process number of the multicast and/or broadcast service, and the HARQ process number is the same value for the group of users. In this case, if the network side determines that only one terminal in the group of terminals does not correctly receive multicast and/or broadcast data according to the HARQ feedback information of the terminal, one processing method is to still perform retransmission using the PDCCH scheduled by the common RNTI, but may cause other terminals that have correctly received data to perform unnecessary data reception again. Another processing mode is to separately perform data retransmission on a terminal which does not correctly receive data through a PDCCH scheduled by a cell radio network temporary identifier (C-RNTI), so that unnecessary receiving actions of other terminals can be avoided. At this time, a mechanism needs to be designed so that the terminal can know that the service retransmitted by using the unicast DCI belongs to the multicast and/or broadcast HARQ process which has not been received correctly before.

In view of this, in various embodiments of the present disclosure, a network side sends a first DCI to a terminal, where the first DCI carries first information; the first information indicates HARQ process related information of a downlink channel which bears multicast and/or broadcast services and is scheduled by the first DCI; where the CRC of the first DCI is scrambled by an RNTI dedicated to the terminal.

According to the embodiment of the present disclosure, the network side indicates to the terminal the information related to the HARQ process of a downlink channel scheduled by the DCI to carry a multicast and/or broadcast service, and the CRC of the DCI is scrambled by the RNTI dedicated to the terminal, so that the retransmission of the multicast and/or broadcast services is realized by using the unicast DCI, thereby avoiding the occupying of signaling overhead of other terminals, and avoiding the unnecessary data reception by other terminal.

An embodiment of the present disclosure provides an information transmission method, which is applied to a network device (specifically, a base station), and the method includes:
sending first downlink control information (DCI) to a terminal, where the first DCI carries first information; the first information is configured to indicate information related to a hybrid automatic repeat request (HARQ) process of a downlink channel scheduled by the first DCI to carry a multicast and/or broadcast service;
where a cyclic redundancy check (CRC) of the first DCI is scrambled by a radio network temporary identifier (RNTI) dedicated to the terminal.

In practical application, the downlink channel may be a downlink shared channel; more specifically, may be a PDSCH. The scheduled downlink channel may also be referred to as scheduled data, TB, or the like.

The terminal-specific RNTI (which may also be referred to as the terminal-specific RNTI) may be a C-RNTI, an MCS-C-RNTI, a configuration scheduling RNTI (CS-RNTI), or the like.

In one embodiment, the first information includes second information and/or third information; the second information is configured to indicate a first HARQ process number of the downlink channel scheduled by the first DCI; the third information is at least configured to determine whether the service transported by the downlink channel scheduled by the first DCI is the multicast and/or broadcast service.

Specifically, the third information may indicate whether the downlink channel scheduled by the first DCI transports a multicast and/or broadcast service; it may also indicate whether the HARQ process of the downlink channel scheduled by the first DCI belongs to a downlink HARQ process transporting multicast and/or broadcast services.

In practical application, since the DCI scrambled by the RNTI dedicated to the terminal is used to schedule retransmission of multicast and/or broadcast services, the network device may further indicate that the initialization value of the scrambling sequence generator of the scheduled PDSCH of the first DCI is related to the RNTI dedicated to the terminal or related to the RNTI (such as G-RNTI) shared by multiple terminals.

Based on this, in an embodiment, the third information is configured to indicate whether the downlink channel scheduled by the first DCI transports the multicast and/or broadcast service.

Here, in practical application, the length of an information field in which the third information is located may be Ibit, and when a value of the information field indicates that the downlink channel scheduled by the first DCI transports multicast and/or broadcast services or indicates that an HARQ process of the downlink channel scheduled by the first DCI belongs to a downlink HARQ process transporting multicast and/or broadcast services, the initialization value of the scrambling sequence generator of the PDSCH scheduled by the first DCI is related to an RNTI shared by multiple terminals, for example, a G-RNTI, and is not related to the RNTI dedicated to the terminal.

In practical application, the network side may configure the number of parallel HARQ processes of an HARQ process (which may also be referred to as a unicast HARQ process) for a unicast service, or predefine the number of parallel HARQ processes of an HARQ process of a unicast service; meanwhile, the network side configures the number of parallel HARQ processes of the multicast and/or broadcast service (which may also be referred to as multicast and/or broadcast HARQ processes) for the multicast and/or broadcast service, or pre-defines the number of parallel HARQ processes of the multicast and/or broadcast service.

Based on this, in an embodiment, the method may further include:
sending fifth information to the terminal, where the fifth information is configured to indicate a first parameter and/or a second parameter; the first parameter represents a number of parallel downlink HARQ processes for transporting unicast service; the second parameter represents a number of parallel downlink HARQ processes for transporting multicast and/or broadcast service.

In practical application, the fifth information may be sent to the terminal through Radio Resource Control (RRC) signaling (such as an RRC reconfiguration message).

Here, the unicast service may be scheduled by a PDCCH subjected to a CRC scrambling by such as C-RNTI, MCS-C-RNTI, or CS-RNTI; multicast and/or broadcast service may be scheduled through a PDCCH subjected to a CRC scrambling by a G-RNTI or other RNTI, etc.

In practical applications, the number of parallel HARQ processes of the multicast and/or broadcast service may be greater than or equal to 1.

When the number of parallel HARQ processes of the HARQ process of the multicast and/or broadcast service is greater than 1, the HARQ process numbers of the HARQ process of the unicast service and the HARQ process of the multicast and/or broadcast service may be counted separately, or the ranges of the candidate HARQ process numbers are completely the same or partially the same, and at this time, the first information may include the second information and the third information. At this time, multicast and/or broadcast services of a plurality of terminals may be scheduled through the DCI.

Based on this, in an embodiment, the method may further include:
sending second DCI to the terminal, where the second DCI carries sixth information; the sixth information is configured to indicate a HARQ process number of a downlink channel scheduled by the second DCI to carry the multicast and/or broadcast service;
where a CRC of the second DCI is scrambled by an RNTI shared by at least two terminals.

Certainly, the process numbers may also be counted in a unified counting manner, that is, the candidate range of the HARQ process number of the unicast service is completely different from the candidate range of the HARQ process number of the multicast and/or broadcast service, for example, the HARQ process number of the HARQ process of the unicast service is 1,2,3,4,5, and the HARQ process number of the HARQ process of the multicast and/or broadcast service is 6,7,8,9, 10; at this time, the first information may include second information.

When the number of parallel HARQ processes of the HARQ process of the multicast and/or broadcast service is equal to 1, the HARQ process numbers of the HARQ process of the unicast service and the HARQ process of the multicast and/or broadcast service may be counted respectively, and at this time, since the number of parallel HARQ processes of the HARQ process of the multicast and/or broadcast service is equal to 1, the terminal may know the first HARQ process number of the downlink channel scheduled by the first DCI, and thus, the first information may include third information; certainly, the network side may issue the second information, that is, the first information may also include the second information. The process number may be counted in a unified counting manner, and in this case, the first information may include the second information.

As can be seen from the above description, in the embodiment of the present disclosure, retransmission of multicast and/or broadcast services is scheduled through DCI, so from this perspective, DCI scrambled by RNTI dedicated to a terminal may schedule both unicast services and multicast and/or broadcast services; while DCI scrambled by RNTIs shared by multiple terminals can only schedule multicast and/or broadcast services. When the DCI scrambled by the RNTI dedicated to the terminal is used for service scheduling, it needs to indicate in the DCI that the downlink channel scheduled this time belongs to a unicast HARQ process or a multicast and/or broadcast HARQ process.

Correspondingly, the embodiment of the disclosure also provides an information transmission method, which is applied to a terminal and includes the following steps:
receiving first downlink control information (DCI) sent by a network side, where the first DCI carries first information; the first information is configured to indicate information related to a hybrid automatic repeat request (HARQ) process of a downlink channel scheduled by the first DCI to carry a multicast and/or broadcast service;
where a cyclic redundancy check (CRC) of the first DCI is scrambled by a radio network temporary identifier (RNTI) dedicated to the terminal.

Here, in an embodiment, the method may further include:
combining data of a transport block (TB) scheduled by the first DCI with the data belonging to the TB in a current soft buffer, when the transmission scheduled by the first DCI is retransmission.

That is to say, when the terminal determines that the TB received in the HARQ process scheduled by the first DCI is retransmitted data and the data of the TB is not correctly received, the terminal combines the received data with the data of the TB which belongs to the same HARQ process and currently in the buffer, so that the HARQ combining process is implemented and the accuracy of correct data reception is improved.

In an embodiment, when the third information is configured to indicate whether the downlink channel scheduled by the first DCI transports a multicast and/or broadcast service, the terminal may further determine, according to the third information, an RNTI used by an initialization value of a scrambling sequence generator of the downlink channel scheduled by the first DCI.

In an embodiment, when the third information is configured to indicate whether the HARQ process of the downlink channel scheduled by the first DCI belongs to a downlink HARQ process for transporting a multicast and/or broadcast service, the terminal may further determine, according to the third information, an RNTI used by an initialization value of a scrambling sequence generator of the downlink channel scheduled by the first DCI.

In an embodiment, when the third information is configured to indicate the RNTI used by the initialization value of the scrambling sequence generator of the downlink channel scheduled by the first DCI, the terminal may determine the RNTI used by the initialization value of the scrambling sequence generator of the downlink channel scheduled by the first DCI, and further determine whether a service transported by the downlink channel scheduled by the first DCI is a multicast and/or broadcast service.

In an embodiment, the method may further include:
obtaining a first parameter and/or a second parameter from the network side or in a predefined manner, where the first parameter represents a number of parallel downlink HARQ processes for transporting unicast service; the second parameter represents a number of parallel downlink HARQ processes for transporting multicast and/or broadcast service.

In one embodiment, the method may include:
receiving fifth information sent by the network side, where the fifth information is configured to indicate the first parameter and/or the second parameter.

In an embodiment, when a number of parallel downlink HARQ processes of the multicast and/or broadcast service is larger than 1, the method further includes:
receiving second DCI sent by the network side, where the second DCI carries sixth information; the sixth information is configured to indicate a HARQ process number of a downlink channel scheduled by the second DCI to carry the multicast and/or broadcast service;
where a CRC of the second DCI is scrambled by an RNTI shared by at least two terminals.

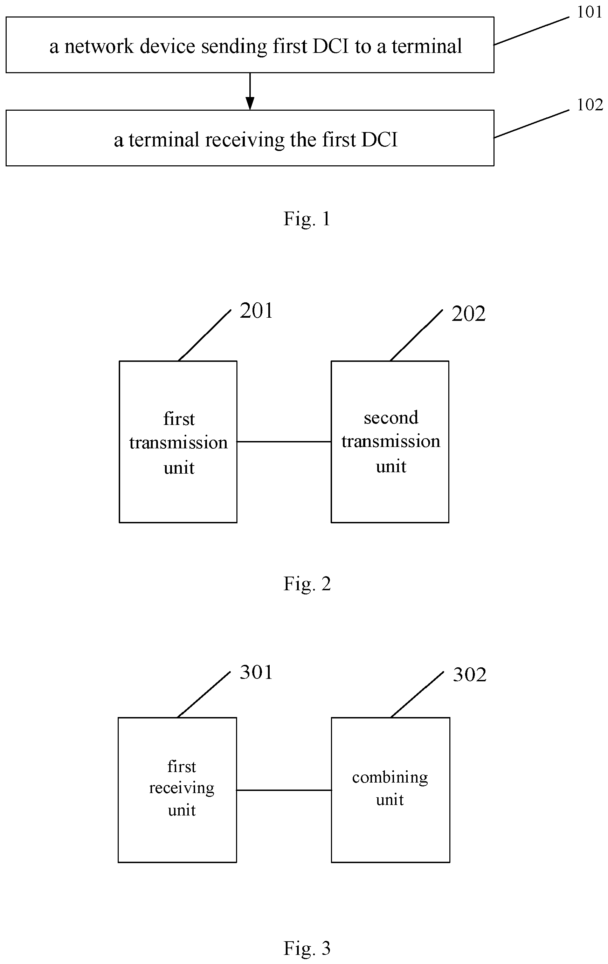

An embodiment of the present disclosure further provides an information transmission method, as shown in Fig. 1, where the method includes:
Step 101: a network device sending first downlink control information (DCI) to a terminal, where the first DCI carries first information; the first information is configured to indicate information related to a hybrid automatic repeat request (HARQ) process of a downlink channel scheduled by the first DCI to carry a multicast and/or broadcast service; where a cyclic redundancy check (CRC) of the first DCI is scrambled by a radio network temporary identifier (RNTI) dedicated to the terminal;
Step 102: a terminal receiving the first DCI.

In the information transmission method provided by the embodiment of the disclosure, the network device sends first downlink control information (DCI) to a terminal, where the first DCI carries first information; the first information is configured to indicate information related to a hybrid automatic repeat request (HARQ) process of a downlink channel scheduled by the first DCI to carry a multicast and/or broadcast service, where a cyclic redundancy check (CRC) of the first DCI is scrambled by a radio network temporary identifier (RNTI) dedicated to the terminal. The network side indicates to the terminal the information related to the HARQ process of a downlink channel scheduled by the DCI to carry a multicast and/or broadcast service, and the CRC of the DCI is scrambled by the RNTI dedicated to the terminal, so that the retransmission of the multicast and/or broadcast services is realized by using the unicast DCI, thereby avoiding the occupying of signaling overhead of other terminals, and avoiding the unnecessary data reception by other terminal.

The present disclosure will be described in further detail with reference to the following disclosure examples.

### Example 1

In this disclosure embodiment, the network side defines the first HARQ process as a unicast HARQ process, and the second HARQ process as a multicast and/or broadcast HARQ process. The network side configures the number of parallel HARQ processes of the first HARQ process and the number of parallel HARQ processes of the second HARQ process for the terminal through high-level signaling, or can predefine the number of parallel HARQ processes of the first HARQ process and the number of parallel HARQ processes of the second HARQ process.

The second DCI may only schedule the multicast and/or broadcast service, and carries sixth information, where the sixth information is configured to indicate an HARQ process number, for example, HARQ process 1, of the currently scheduled multicast and/or broadcast service. The second DCI is a common DCI, that is, DCI detected by multiple terminals together, and the RNTI scrambled by the second DCI is a common RNTI, for example, a G-RNTI.

If the terminal does not correctly receive the data scheduled by the second DCI, the terminal feeds back NACK.

After receiving the NACK of the multicast and/or broadcast service fed back by the terminal, the network side retransmits the terminal by adopting the first DCI.

The first DCI can be only used for scheduling one terminal and is DCI dedicated to one terminal, and the RNTI scrambled by the first DCI can be C-RNTI, MCS-C-RNTI, CS-RNTI or RNTI dedicated to other terminals.

When the network side uses the first DCI to perform multicast and/or broadcast service retransmission scheduling on the terminal, the second information is configured to indicate that the number of the HARQ process is HARQ process 1, and the third information is configured to indicate that the currently scheduled data belongs to the second HARQ process, namely, the currently scheduled data belongs to the multicast and/or broadcast HARQ process.

After detecting the first DCI, the terminal can know that the data scheduled by the current first DCI is the retransmission of the data scheduled by the second DCI, so that the data scheduled by the first DCI and belonging to the second HARQ process with the HARQ process number of 1 may be combined with the data scheduled by the second DCI and belonging to the second HARQ process with the HARQ process number of 1, which is stored in the buffer before, that is, the TBs belonging to the same HARQ process number and having the same HARQ process index are combined.

Through the operation, the retransmission of the multicast and/or broadcast service data by using the DCI dedicated to the terminal is realized, and the terminal can identify that the currently scheduled data is the multicast and/or broadcast service through the third information in the DCI dedicated to the terminal, so that the currently scheduled data can be combined with the data which is not correctly received before, and the purpose of HARQ is realized.

### Example 2

In this disclosure embodiment, the network side defines the first HARQ process as a unicast HARQ process, and the second HARQ process as a multicast and/or broadcast HARQ process. The network side configures the number of parallel HARQ processes of a first HARQ process for the terminal through high-level signaling, and predefines the number of parallel HARQ processes of a second HARQ process to be 1.

The second DCI can only schedule multicast and/or broadcast services, the second DCI is a common DCI, that is, DCI detected by multiple terminals together, and the RNTI scrambled by the second DCI is a common RNTI, for example, a G-RNTI.

If the terminal does not correctly receive the data scheduled by the second DCI, the terminal feeds back NACK.

After receiving the NACK of the multicast second DCI broadcast service fed back by the terminal, the network side retransmits the terminal by adopting the first DCI.

The first DCI can be only used for scheduling one terminal and is DCI dedicated to one terminal, and the RNTI scrambled by the first DCI can be C-RNT, MCS-C-RNTI, CS-RNTI or RNTI dedicated to other terminals.

When the network side performs multicast second DCI broadcast service retransmission scheduling on the terminal by using the first DCI, the third information is configured to indicate that the currently scheduled data belongs to a second HARQ process, namely, belongs to a multicast and/or broadcast HARQ process.

After the terminal detects the first DCI, it can know that the data scheduled by the current first DCI is the retransmission of the data scheduled by the second DCI, so that the data scheduled by the first DCI and belonging to the second HARQ process may be combined with the data scheduled by the second DCI stored in the buffer, that is, the TB belonging to the second HARQ process is combined.

Through the operation, the retransmission of the multicast and/or broadcast service is realized by using the DCI dedicated to the terminal, and the terminal can identify that the currently scheduled data is the multicast and/or broadcast service through the third information in the DCI dedicated to the terminal, so that the currently scheduled data can be combined with the data which is not correctly received before, and the purpose of HARQ is realized.

### Example 3

In this embodiment, the network side defines the first HARQ process as a unicast HARQ process, and the second HARQ process as a multicast and/or broadcast HARQ process. The network side configures the number of parallel HARQ processes of the first HARQ process and the number of parallel HARQ processes of the second HARQ process for the terminal through high-level signaling, or can predefine the number of parallel HARQ processes of the first HARQ process and the number of parallel HARQ processes of the second HARQ process.

When service scheduling is carried out, one DCI is a DCI dedicated to a terminal, which can schedule unicast service and multicast and/or broadcast service, and the RNTI scrambled by the DCI can be C-RNTI, MCS-C-RNTI, CS-RNTI or RNTI dedicated to other terminals. Wherein, the third information in the DCI is used to indicate that the data of this scheduling belongs to the first HARQ process or the second HARQ process, that is, belongs to a unicast HARQ process or belongs to a multicast and/or broadcast HARQ process; the value of the information field in which the third information is located specifically indicates that the initialization value of the scrambling sequence generator used by the scheduled PDSCH is a scrambling code related to a terminal-specific parameter.

The terminal, in combination with the joint indication of the second information field and the third information field, may determine whether the currently scheduled service belongs to a unicast service or a multicast and/or broadcast service, and may also know the corresponding HARQ process number.

The network side is supposed to perform multicast and/or broadcast initial transmission scheduling on the terminal by using the DCI, and indicates that the PDSCH scheduled this time belongs to a second HARQ process, and the number of the HARQ process is 1; the value of the information field in which the third information is located specifically indicates that the initialization value of the scrambling sequence generator for the use of the currently scheduled PDSCH is a scrambling code related to one common parameter.

If the terminal does not correctly receive the scheduled data, the terminal feeds back NACK.

After receiving the NACK of the multicast/broadcast service fed back by the terminal, the network side adopts another DCI to carry out retransmission scheduling on the terminal. When the network side uses the DCI to perform multicast and/or broadcast service retransmission scheduling on the terminal, the PDSCH scheduled this time is indicated to belong to a second HARQ process, and the number of the HARQ process is 1. In particular, the value of the information field in which the third information is located indicates that the initialization value of the scrambling sequence generator for the use of the currently scheduled PDSCH is a scrambling code related to the terminal-specific parameter (such as related to the terminal-specific RNTI). Since this scrambling code is related to terminal specific parameters, the PDSCH is specific to the terminal, i.e. previous multicast and/or broadcast service data is retransmitted using a similar unicast transmission technique, which can be more adapted to the channel state of the terminal.

After the terminal detects the DCI, it can know that the data scheduled by the DCI is the retransmission, so that the data scheduled by the DCI and belonging to the second HARQ process with the HARQ process number 1 may be combined with the data stored in the buffer and belonging to the second HARQ process with the HARQ process number 1, that is, the TBs belonging to the same HARQ process number and having the same HARQ process index may be combined.

### Example 4

In this disclosure embodiment, the network side defines the first HARQ process as a unicast HARQ process, and the second HARQ process as a multicast and/or broadcast HARQ process. The network side configures the number of parallel HARQ processes of a first HARQ process for the terminal through high-level signaling, and predefines the number of parallel HARQ processes of a second HARQ process to be 1.

When service scheduling is carried out, one DCI is a DCI dedicated to a terminal, which can schedule unicast service and multicast and/or broadcast service, and the RNTI scrambled by the DCI can be C-RNTI, MCS-C-RNTI, CS-RNTI or RNTI dedicated to other terminals. Wherein, the third information in the DCI is used to indicate that the data of this scheduling belongs to the first HARQ process or the second HARQ process, that is, belongs to a unicast HARQ process or belongs to a multicast and/or broadcast HARQ process; the value of the information field in which the third information is located specifically indicates that the initialization value of the scrambling sequence generator used by the scheduled PDSCH is a scrambling code related to a terminal-specific parameter.

Assuming that the network side performs multicast and/or broadcast initial transmission scheduling on the terminal by using the DCI, and indicating that the PDSCH scheduled at this time belongs to a second HARQ process. The value of the information field in which the third information is located specifically indicates that the initialization value of the scrambling sequence generator for the use of the currently scheduled PDSCH is a scrambling code related to one common parameter.

If the terminal does not correctly receive the scheduled data, the terminal feeds back NACK.

After receiving the NACK of the multicast/broadcast service fed back by the terminal, the network side adopts another DCI to carry out retransmission scheduling on the terminal. And when the network side utilizes the DCI to carry out multicast and/or broadcast service retransmission scheduling on the terminal, indicating that the PDSCH scheduled at this time belongs to a second HARQ process. In particular, the value of the information field in which the third information is located indicates that the initialization value of the scrambling sequence generator for the use of the currently scheduled PDSCH is a scrambling code related to the terminal-specific parameter (such as related to the terminal-specific RNTI). Since this scrambling code is related to terminal specific parameters, the PDSCH is specific to the terminal, i.e. previous multicast and/or broadcast service data is retransmitted using a similar unicast transmission technique, which can be more adapted to the channel state of the terminal.

After the terminal detects the DCI, it can know that the currently scheduled data of the DCI is a retransmission, and therefore combine the data belonging to the second HARQ process scheduled by the DCI with the data belonging to the second HARQ process stored in the buffer before, that is, combine TBs belonging to the same HARQ process number and the same HARQ process index.

As can be seen from the above description, in the embodiment of the present disclosure, two HARQ process sets (i.e., a first HARQ process and a second HARQ process) are defined, which correspond to an HARQ process of unicast service and an HARQ process of multicast and/or broadcast service, respectively; the scheme of the embodiment of the disclosure provides a method for processing the HARQ process of the multicast and/or broadcast service, can realize the initial transmission and retransmission of the multicast/broadcast data packet by using unicast DCI, can realize the flexible switching of unicast/multicast transmission, and realizes the combination of the terminal on the multicast and/or broadcast HARQ process.

In order to implement the method according to the embodiment of the present disclosure, an embodiment of the present disclosure further provides an information transmission apparatus, which is disposed on a network device, and as shown in Fig. 2, the apparatus includes:
a first transmission unit 201 configured to send first downlink control information (DCI) to a terminal, where the first DCI carries first information; the first information is configured to indicate information related to a hybrid automatic repeat request (HARQ) process of a downlink channel scheduled by the first DCI to carry a multicast and/or broadcast service; where a cyclic redundancy check (CRC) of the first DCI is scrambled by a radio network temporary identifier (RNTI) dedicated to the terminal.

In an embodiment, as shown in Fig. 2, the apparatus may further include:
a second transmission unit 202 configured to second DCI to the terminal, where the second DCI carries sixth information; the sixth information is configured to indicate a HARQ process number of a downlink channel scheduled by the second DCI to carry the multicast and/or broadcast service;
where a CRC of the second DCI is scrambled by an RNTI shared by at least two terminals.

In practical applications, the first sending unit 201 and the second sending unit 202 may be implemented by a processor in the information transmission apparatus in combination with a communication interface.

In order to implement the method at the network device side in the embodiment of the present disclosure, an embodiment of the present disclosure further provides an information transmission apparatus, which is disposed on a terminal, and as shown in Fig. 3, the apparatus includes:
a first receiving unit 301, configured to receive first downlink control information (DCI) sent by a network side, where the first DCI carries first information; the first information is configured to indicate information related to a hybrid automatic repeat request (HARQ) process of a downlink channel scheduled by the first DCI to carry a multicast and/or broadcast service;
where a cyclic redundancy check (CRC) of the first DCI is scrambled by a radio network temporary identifier (RNTI) dedicated to the terminal.

In an embodiment, as shown in Fig. 3, the apparatus may further include:
a combining unit 302, configured to combine the received data of a transport block (TB) scheduled by the first DCI with the data belonging to the TB in a current soft buffer, when the transmission scheduled by the first DCI is retransmission.

In an embodiment, the apparatus may further include:
a determining unit, configured to determine, when third information in the first information indicates whether the downlink channel scheduled by the first DCI transports a multicast and/or broadcast service, an RNTI used by an initialization value of a scrambling sequence generator of the downlink channel scheduled by the first DCI according to the third information.

In an embodiment, the determining unit is further configured to determine, according to third information in the first information, an RNTI used by an initialization value of a scrambling sequence generator of a downlink channel scheduled by the first DCI when the third information is configured to indicate whether an HARQ process of the downlink channel scheduled by the first DCI belongs to a downlink HARQ process transporting multicast and/or broadcast services.

In an embodiment, the determining unit is further configured to determine, when third information in the first information indicates an RNTI used by an initialization value of a scrambling sequence generator of a downlink channel scheduled by the first DCI, the RNTI used by the initialization value of the scrambling sequence generator of the downlink channel scheduled by the first DCI according to the third information.

In an embodiment, the apparatus may further include:
an obtaining unit, configured to obtain a first parameter and/or a second parameter from the network side or in a predefined manner, where the first parameter represents a number of parallel downlink HARQ processes for transporting unicast service; the second parameter represents a number of parallel downlink HARQ processes for transporting multicast and/or broadcast service.

In an embodiment, the obtaining unit is configured to:
receiving fifth information sent by a network side; the fifth information is configured to indicate the first parameter and/or the second parameter.

In an embodiment, the apparatus may further include:
a second receiving unit configured to:
receive a second DCI sent by a network side when the number of parallel downlink HARQ processes for transporting multicast and/or broadcast service is greater than 1; the second DCI carries sixth information; the sixth information is configured to indicate the HARQ process number of the downlink channel for transporting the multicast and/or broadcast service scheduled by the second DCI; where,
the CRC of the second DCI is scrambled by an RNTI shared by at least two terminals.

In practical application, the first receiving unit 301 and the second receiving unit may be implemented by a communication interface in an information transmission device; the merging unit 302 and the determining unit may be implemented by a processor in the information transmission apparatus; the acquisition unit may be implemented by a processor in the information transmission apparatus in combination with the communication interface.

It should be noted that: in the information transmission device provided in the foregoing embodiment, when information is transmitted, only the division of each program module is illustrated, and in practical applications, the processing allocation may be completed by different program modules according to needs, that is, the internal structure of the device may be divided into different program modules to complete all or part of the processing described above. In addition, the information transmission apparatus and the information transmission method provided in the above embodiments belong to the same concept, and specific implementation processes thereof are described in detail in the method embodiments and are not described herein again.

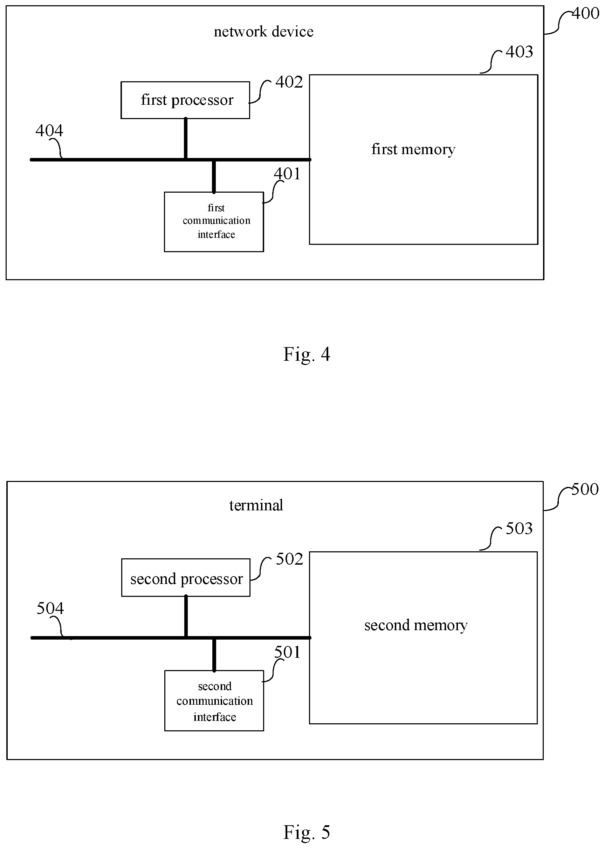

Based on the hardware implementation of the program module, and in order to implement the operation on the network device side in the embodiment of the present disclosure, an embodiment of the present disclosure further provides a network device, as shown in Fig. 4, where the network device 400 includes:
a first communication interface 401, capable of performing information interaction with a terminal;
the first processor 402 is connected to the first communication interface 401 to implement information interaction with a terminal, and is configured to execute a method provided by one or more technical solutions of the network device side when running a computer program. And the computer program is stored on the first memory 403.

Specifically, the first communication interface 401 is configured to send first DCI to a terminal; the first DCI carries first information; the first information is configured to indicate information related to a hybrid automatic repeat request (HARQ) process of a downlink channel scheduled by the first DCI to carry a multicast and/or broadcast service;
a cyclic redundancy check (CRC) of the first DCI is scrambled by a radio network temporary identifier (RNTI) dedicated to the terminal.

In an embodiment, the first communication interface 401 is further configured to send a second DCI to the terminal; the second DCI carries sixth information; the sixth information is configured to indicate the HARQ process number of the downlink channel for transporting the multicast and/or broadcast service scheduled by the second DCI; where,
a CRC of the second DCI is scrambled by an RNTI shared by at least two terminals.

Of course, in actual practice, the various components in network device 400 are coupled together by bus system 404. It is understood that the bus system 404 is configured to enable connected communication between these components. The bus system 404 includes a power bus, a control bus, and a status signal bus in addition to a data bus. For clarity of illustration, however, the various buses are labeled as bus system 404 in FIG. 4.

The first memory 403 in the embodiment of the present disclosure is configured to store various types of data to support the operation of the network device 400. Examples of such data include: any computer program for operating on network device 400.

The method disclosed in the embodiment of the present disclosure may be applied to the first processor 402, or implemented by the first processor 402. The first processor 402 may be an integrated circuit chip having signal processing capabilities. In implementation, the steps of the above method may be implemented by integrated logic circuits of hardware or instructions in the form of software in the first processor 402. The first Processor 402 may be a general purpose Processor, a Digital Signal Processor (DSP), or other programmable logic device, discrete gate or transistor logic device, discrete hardware component, etc. The first processor 402 may implement or perform the methods, steps, and logic blocks disclosed in the embodiments of the present disclosure. The general purpose processor may be a microprocessor or any conventional processor or the like. The steps of the method disclosed in the embodiments of the present disclosure may be directly implemented by a hardware decoding processor, or implemented by a combination of hardware and software modules in the decoding processor. The software module may be located in a storage medium located in the first memory 403, and the first processor 402 reads the information in the first memory 403, and in combination with the hardware thereof, performs the steps of the foregoing method.

In an exemplary embodiment, the network Device 400 may be implemented by one or more Application Specific Integrated Circuits (ASICs), DSPs, Programmable Logic Devices (PLDs), Complex Programmable Logic Devices (CPLDs), Field Programmable Gate Arrays (FPGAs), general purpose processors, controllers, Micro Controllers (MCUs), microprocessors (microprocessors), or other electronic components configured to perform the foregoing methods.

Based on the hardware implementation of the program module, and in order to implement the method at the terminal side in the embodiment of the present disclosure, an embodiment of the present disclosure further provides a terminal, as shown in Fig. 5, where the terminal 500 includes:
a second communication interface 501 capable of performing information interaction with a network device;
the second processor 502 is connected to the second communication interface 501 to implement information interaction with a network device, and when the second processor is configured to run a computer program, the second processor executes a method provided by one or more technical solutions of the terminal side. And the computer program is stored on the second memory 503.

Specifically, the second communication interface 501 is configured to receive first downlink control information (DCI) sent by a network side, where the first DCI carries first information; the first information is configured to indicate information related to a hybrid automatic repeat request (HARQ) process of a downlink channel scheduled by the first DCI to carry a multicast and/or broadcast service,
a cyclic redundancy check (CRC) of the first DCI is scrambled by a radio network temporary identifier (RNTI) dedicated to the terminal.

In an embodiment, the second processor 502 is configured to, combine data of a transport block (TB) scheduled by the first DCI with the data belonging to the TB in a current soft buffer, when the transmission scheduled by the first DCI is retransmission.

In an embodiment, the second processor 502 is further configured to determine, according to third information in the first information, an RNTI used by an initialization value of a scrambling sequence generator of a downlink channel scheduled by the first DCI when the third information is configured to indicate whether the downlink channel scheduled by the first DCI transports a multicast and/or broadcast service.

In an embodiment, the second processor 502 is further configured to determine, according to third information in the first information, an RNTI used by an initialization value of a scrambling sequence generator of a downlink channel scheduled by the first DCI when the third information is configured to indicate whether an HARQ process of the downlink channel scheduled by the first DCI belongs to a downlink HARQ process transporting multicast and/or broadcast services.

In an embodiment, the second processor 502 is further configured to determine, when third information in the first information indicates an RNTI used by an initialization value of a scrambling sequence generator of a downlink channel scheduled by the first DCI, the RNTI used by the initialization value of the scrambling sequence generator of the downlink channel scheduled by the first DCI according to the third information.

In an embodiment, the second processor 502 is further configured to obtain the first parameter and/or the second parameter by obtaining from a network side or in a predefined manner; the first parameter represents the number of parallel downlink HARQ processes for transporting unicast service; the second parameter represents the number of parallel downlink HARQ processes for transporting multicast and/or broadcast service.

In an embodiment, the second processor 502 is further configured to:
receive fifth information sent by the network side through the second communication interface 501; the fifth information is configured to indicate the first parameter and/or the second parameter.

In an embodiment, the second communication interface 501 is further configured to:
receiving a second DCI sent by a network side when the number of parallel downlink HARQ processes for transporting multicast and/or broadcast service is greater than 1; the second DCI carries sixth information; the sixth information is configured to indicate the HARQ process number of the downlink channel for transporting the multicast and/or broadcast service scheduled by the second DCI; where,
the CRC of the second DCI is scrambled by an RNTI shared by at least two terminals.

Of course, in practice, the various components in the terminal 500 are coupled together by a bus system 504. It is understood that the bus system 504 is configured to enable connected communication between these components. The bus system 504 includes a power bus, a control bus, and a status signal bus in addition to a data bus. For clarity of illustration, however, the various buses are labeled as bus system 504 in FIG. 5.

The second memory 503 in the embodiment of the present disclosure is configured to store various types of data to support the operation of the terminal 500. Examples of such data include: any computer program for operating on the terminal 500.

The method disclosed in the embodiment of the present disclosure may be applied to the second processor 502, or implemented by the second processor 502. The second processor 502 may be an integrated circuit chip having signal processing capabilities. In implementation, the steps of the above method may be implemented by integrated logic circuits of hardware or instructions in the form of software in the second processor 502. The second processor 502 described above may be a general purpose processor, a DSP, or other programmable logic device, discrete gate or transistor logic device, discrete hardware components, or the like. The second processor 502 may implement or perform the methods, steps, and logic blocks disclosed in the embodiments of the present disclosure. The general purpose processor may be a microprocessor or any conventional processor or the like. The steps of the method disclosed in the embodiments of the present disclosure may be directly implemented by a hardware decoding processor, or implemented by a combination of hardware and software modules in the decoding processor. The software module may be located in a storage medium located in the second memory 503, and the second processor 502 reads the information in the second memory 503, and in combination with the hardware thereof, performs the steps of the foregoing method.

In an exemplary embodiment, the terminal 500 may be implemented by one or more ASICs, DSPs, PLDs, CPLDs, FPGAs, general-purpose processors, controllers, MCUs, microprocessors, or other electronic elements configured to perform the aforementioned methods.

It is understood that the memories (the first memory 403 and the second memory 503) of the embodiments of the present disclosure may be volatile memories or nonvolatile memories, and may include both volatile and nonvolatile memories. Among them, the nonvolatile Memory may be a Read Only Memory (ROM), a Programmable Read Only Memory (PROM), an Erasable Programmable Read-Only Memory (EPROM), an Electrically Erasable Programmable Read-Only Memory (EEPROM), a magnetic random access Memory (FRAM), a magnetic random access Memory (Flash Memory), a magnetic surface Memory, an optical Disc, or a Compact Disc Read-Only Memory (CD-ROM); the magnetic surface storage may be disk storage or tape storage. Volatile Memory can be Random Access Memory (RAM), which acts as external cache Memory. By way of illustration, and not limitation, many forms of RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Double Data Rate Synchronous Random Access Memory (ESDRAM), Enhanced Synchronous Dynamic Random Access Memory (ESDRAM), Enhanced Synchronous Random Access Memory (DRAM), Synchronous Random Access Memory (DRAM), Direct Random Access Memory (DRmb Access Memory). The memories described in the embodiments of the present disclosure are intended to include, without being limited to, these and any other suitable types of memory.

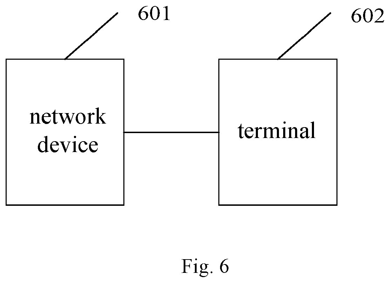

An embodiment of the present disclosure further provides an information transmission system, as shown in Fig. 6, the system includes: a network device 601 and a terminal 602.

Here, it should be noted that specific processing procedures of the network device 601 and the terminal 602 are already described in detail above, and are not described herein again.

In an exemplary embodiment, the present disclosure further provides a storage medium, specifically a computer storage medium, which is a computer readable storage medium, for example, the storage medium includes a first memory 403 storing a computer program, and the computer program is executable by a first processor 402 of the network device 400 to perform the steps of the network device side method. For example, the second memory 503 may be adapted to store a computer program, which is executable by the second processor 502 of the terminal 500 to perform the steps of the terminal-side method. The computer readable storage medium may be Memory such as FRAM, ROM, PROM, EPROM, EEPROM, Flash Memory, magnetic surface Memory, optical disk, or CD-ROM.

It should be noted that: "first," "second," and the like are used for distinguishing between similar elements and not necessarily for describing a particular sequential or chronological order.

The technical means described in the embodiments of the present disclosure may be arbitrarily combined without conflict.

The above description is only a preferred embodiment of the present disclosure, and is not intended to limit the scope of the present disclosure.

## Claims

1. An information transmission method, applied to network device and comprising:
sending first downlink control information (DCI) to a terminal, wherein the first DCI carries first information; the first information is configured to indicate information related to a hybrid automatic repeat request (HARQ) process of a downlink channel scheduled by the first DCI to transport multicast and/or broadcast service;
wherein a cyclic redundancy check (CRC) of the first DCI is scrambled by a radio network temporary identifier (RNTI) dedicated to the terminal.

2. The method according to claim 1, wherein the first information comprises second information and/or third information; the second information is configured to indicate a first HARQ process number of the downlink channel scheduled by the first DCI; the third information is at least configured to determine whether the service transported by the downlink channel scheduled by the first DCI is multicast and/or broadcast service.

3. The method according to claim 2, wherein the third information is configured to indicate whether the downlink channel scheduled by the first DCI transports multicast and/or broadcast service.

4. The method according to claim 2, wherein the third information is configured to indicate whether the HARQ process of the downlink channel scheduled by the first DCI belongs to a downlink HARQ process transporting multicast and/or broadcast service.

5. The method according to claim 2, wherein the third information is configured to indicate the RNTI used by an initialization value of a scrambling sequence generator of the downlink channel scheduled by the first DCI.

6. The method according to any one of claims 1 to 5, further comprising:
sending fifth information to the terminal, wherein the fifth information is configured to indicate a first parameter and/or a second parameter; the first parameter represents a number of parallel downlink HARQ processes for transporting unicast service; the second parameter represents a number of parallel downlink HARQ processes for transporting multicast and/or broadcast service.

7. The method according to any according to claims 1 to 5, wherein when a number of parallel downlink HARQ processes of multicast and/or broadcast service is larger than 1, the method further comprises:
sending second DCI to the terminal, wherein the second DCI carries sixth information; the sixth information is configured to indicate a HARQ process number of a downlink channel scheduled by the second DCI to transport multicast and/or broadcast service;
wherein the CRC of the second DCI is scrambled by an RNTI shared by at least two terminals.

8. An information transmission method, applied to a terminal and comprising:
receiving first downlink control information (DCI) sent by a network side, wherein the first DCI carries first information; the first information is configured to indicate information related to a hybrid automatic repeat request (HARQ) process of a downlink channel scheduled by the first DCI to transport multicast and/or broadcast service;
wherein a cyclic redundancy check (CRC) of the first DCI is scrambled by a radio network temporary identifier (RNTI) dedicated to the terminal.

9. The method according to claim 8, further comprising:
combining data of a transport block (TB) scheduled by the first DCI with the data belonging to the TB in a current soft buffer, when the transmission scheduled by the first DCI is retransmission.

10. The method according to claim 8, wherein the first information comprises second information and/or third information; the second information is configured to indicate a first HARQ process number of the downlink channel scheduled by the first DCI; the third information is at least configured to determine whether the service transported by the downlink channel scheduled by the first DCI is multicast and/or broadcast service.

11. The method according to claim 10, wherein the third information is configured to indicate whether the downlink channel scheduled by the first DCI transports multicast and/or broadcast service.

12. The method according to claim 10, wherein the third information is configured to indicate whether the HARQ process of the downlink channel scheduled by the first DCI belongs to a downlink HARQ process transporting multicast and/or broadcast service.

13. The method according to claim 10, wherein the third information is configured to indicate the RNTI used by an initialization value of a scrambling sequence generator of the downlink channel scheduled by the first DCI.

14. The method according to any one of claims 11 to 13, further comprising:
determining the RNTI used by the initialization value of the scrambling sequence generator of the downlink channel scheduled by the first DCI, according to the third information.

15. The method according to any one of claims 8 to 13, further comprising:
obtaining a first parameter and/or a second parameter from the network side or in a predefined manner, wherein the first parameter represents a number of parallel downlink HARQ processes for transporting unicast service; the second parameter represents a number of parallel downlink HARQ processes for transporting multicast and/or broadcast service.

16. The method according to claim 15, further comprising:
receiving fifth information sent by the network side, wherein the fifth information is configured to indicate the first parameter and/or the second parameter.

17. The method according to any one according to claims 8 to 13, wherein when a number of parallel downlink HARQ processes of multicast and/or broadcast service is larger than 1, the method further comprises:
receiving second DCI sent by the network side, wherein the second DCI carries sixth information; the sixth information is configured to indicate a HARQ process number of a downlink channel scheduled by the second DCI to transport multicast and/or broadcast service;
wherein the CRC of the second DCI is scrambled by an RNTI shared by at least two terminals.

18. An information transmission apparatus, comprising:
a first transmission unit, configured to send first downlink control information (DCI) to a terminal, wherein the first DCI carries first information; the first information is configured to indicate information related to a hybrid automatic repeat request (HARQ) process of a downlink channel scheduled by the first DCI to transport multicast and/or broadcast service;
wherein a cyclic redundancy check (CRC) of the first DCI is scrambled by a radio network temporary identifier (RNTI) dedicated to the terminal.

19. An information transmission apparatus, comprising:
a first receiving unit, configured to receive first downlink control information (DCI) sent by a network side, wherein the first DCI carries first information; the first information is configured to indicate information related to a hybrid automatic repeat request (HARQ) process of a downlink channel scheduled by the first DCI to transport multicast and/or broadcast service;
wherein a cyclic redundancy check (CRC) of the first DCI is scrambled by a radio network temporary identifier (RNTI) dedicated to the terminal.

20. A network device, comprising: a first communication interface and a first processor; wherein
the first communication interface is configured to send first downlink control information (DCI) to a terminal, wherein the first DCI carries first information; the first information is configured to indicate information related to a hybrid automatic repeat request (HARQ) process of a downlink channel scheduled by the first DCI to transport multicast and/or broadcast service;
wherein a cyclic redundancy check (CRC) of the first DCI is scrambled by a radio network temporary identifier (RNTI) dedicated to the terminal.

21. A terminal, comprising: a second communication interface and a second processor; wherein
the second communication interface is configured to receive first downlink control information (DCI) sent by a network side, wherein the first DCI carries first information; the first information is configured to indicate information related to a hybrid automatic repeat request (HARQ) process of a downlink channel scheduled by the first DCI to transport multicast and/or broadcast service;
wherein a cyclic redundancy check (CRC) of the first DCI is scrambled by a radio network temporary identifier (RNTI) dedicated to the terminal.

22. A network device, comprising: a first processor, and a first memory configured to store a computer program executable on the processor,
wherein the first processor is configured to execute the computer program to perform the method according to any one according to claims 1 to 7.

23. A network device, comprising: a second processor, and a second memory configured to store a computer program executable on the processor,
wherein the second processor is configured to execute the computer program to perform the method according to any one according to claims 8 to 17.

24. A storage medium, storing a computer program, wherein the computer program is executed by a processor to perform the method according to any one according to claims 1 to 7 or the method according to any one according to claims 8 to 17.
